# EUROPÄISCHE PATENTSCHRIFT

(11) **EP 2 509 838 B1**
(45) Veröffentlichungstag und Bekanntmachung des Hinweises auf die Patenterteilung: **25.04.2018**
(21) Anmeldenummer: 10771071.7
(22) Anmeldetag: 15.10.2010
(51) Int. Cl.: B60W 20/00, B60K 6/48, B60W 10/06, B60W 10/08

(54) **VERFAHREN UND VORRICHTUNG ZUR REGELUNG DES LEERLAUFES IN EINEM HYBRIDFAHRZEUG**
METHOD AND DEVICE TO CONTROL THE IDLE SPEED IN A HYBRID VEHICLE
PROCÉDÉ ET DISPOSITIF POUR RÉGLAGE DE LA MARCHE À VIDE DANS UN VÉHICULE HYBRIDE

(30) Priorität: 08.12.2009 DE 102009047618
(43) Veröffentlichungstag der Anmeldung: 17.10.2012
(73) Patentinhaber: Robert Bosch GmbH, 70442 Stuttgart (DE)
(72) Erfinder: SEEL, Andreas, 53229 Bonn (DE)
(86) Internationale Anmeldenummer: PCT/EP2010/065532
(87) Internationale Veröffentlichungsnummer: WO 2011/069726

(56) Entgegenhaltungen:
- DE-A1-102007 016 513
- DE-A1-102007 016 514
- DE-A1-102007 061 231
- GB-A- 2 455 177

## Beschreibung

### Stand der Technik

Die Erfindung betrifft ein Verfahren zur Regelung des Leerlaufes in einem Hybridfahrzeug, bei welchem mindestens zwei Antriebsaggregate gemeinsam oder getrennt zum Antrieb des Hybridfahrzeuges beitragen und zur Regelung des Leerlaufes ein Sollwert mit einem Istwert verglichen wird, wobei in Abhängigkeit des Vergleiches durch Veränderung mindestens eines Verstärkungsfaktors der Regelung die Solldrehzahl eingestellt wird sowie eine Vorrichtung zur Durchführung des Verfahrens.

Fahrzeuge mit einer hybriden Antriebsstruktur weisen einen Verbrennungsmotor und als zweites Antriebsaggregat meistens einen Elektromotor auf. So kann das Antriebsmoment während des Fahrbetriebes des Hybridfahrzeuges von beiden Antriebsaggregaten aufgebracht werden.

Um die Mindestdrehzahl einzuhalten, haben Verbrennungsmotoren einen Leerlaufregler, der eine Solldrehzahl mit einer Istdrehzahl vergleicht und aus diesem Vergleich ein Reglermoment generiert, welches die Solldrehzahl einstellt. Die Regelung umfasst dabei Verstärkungsfaktoren, die in einem Applikationsvorgang an den jeweiligen Motor angepasst werden. Nach dem Zustand der jeweiligen Regelstrecke, welche durch den Triebstrang, den Motor und das Fahrzeug gebildet wird, werden je nachdem, ob der Verbrennungsmotor warm oder kalt ist oder im ersten oder einem anderen Gang gefahren wird, unterschiedliche Verstärkungsfaktoren ausgewählt, welche als Parametersätze zur Verfügung stehen. Dabei verbessern höhere Verstärkungsfaktoren die Dynamik des Leerlaufreglers. Sind sie aber zu hoch, kann es zu Schwingungen des Reglerausgangssignals kommen, was zu einer Instabilität der Regelung führt.

In Hybridfahrzeugen hat der Elektromotor eine deutlich höhere Dynamik beim Auf- und Abbau des Drehmomentes, welches von dem Elektromotor abgegeben wird, als der Verbrennungsmotor. Allerdings muss berücksichtigt werden, dass der Elektromotor zur Leerlaufregelung nur ein eingeschränktes oder gar kein Drehmoment ausgibt, was beispielsweise darauf zurückzuführen ist, dass die den Elektromotor mit Energie versorgende Hochvoltbatterie leer ist oder eine Überhitzung des Elektromotors stattfindet. Deshalb werden die Regelverstärkungsfaktoren im Leerlaufregler des Hybridfahrzeuges nur so hoch gewählt, dass ein stabiler Leerlauf auch ohne Unterstützung durch den Elektromotor erzielt wird. Das Hinzufügen von weiteren Parametersätzen, die bei der Leerlaufregelung des Verbrennungsmotors angeben, dass der Elektromotor ausgefallen ist, wie beispielsweise "kalter Verbrennungsmotor mit Unterstützung des Elektromotors" bzw. "kalter Verbrennungsmotor ohne Unterstützung des Verbrennungsmotors" würde die Parametersätze des Verbrennungsmotors verdoppeln und ist daher sehr aufwändig.

Die Offenlegungsschrift DE 10 2007 061 231 A1 beschreibt ein Verfahren zum Betreiben einer Hybridantriebsvorrichtung, bei welchem ein PID-Regler zur Regelung einer Drehzahl verwendet wird. Aus GB 2 455 177 A ist es ebenfalls bekannt, zur Regelung einer Leerlaufdrehzahl einen PID-Regler zu verwenden.

### Offenbarung der Erfindung

Das erfindungsgemäße Verfahren zur Regelung des Leerlaufes in einem Hybridfahrzeug mit den Merkmalen des Anspruchs 1 weist dabei den Vorteil auf, dass die Regeldynamik an das tatsächliche Übertragungsverhalten des ersten der beiden Antriebsaggregate angepasst wird. Dadurch, dass die Regelung des Leerlaufes für die beiden Antriebsaggregate gleichzeitig erfolgt, wobei der mindestens eine Verstärkungsfaktor kontinuierlich an die Leistung eines ersten der beiden Antriebsaggregate angepasst wird, erfolgt bei einem Absinken der Leistung des ersten der beiden Antriebsaggregate ein allmähliches Überführen der Leerlaufregelung der beiden Antriebsaggregates in eine alleinige Leerlaufregelung des zweiten Antriebsaggregates, wenn die Leistung des ersten der beiden Antriebsaggregate absinkt. Somit wird je nach Betriebszustand der beiden Antriebsaggregate immer eine optimale stabile Leerlaufregelung eingestellt, wobei die Dynamik des ersten der beiden Antriebsaggregates je nach dessen Leistung bzw. des Übertragungsverhaltens immer mit berücksichtigt wird. Durch die Berücksichtigung von Zwischenzuständen der Leistungsabgabe des ersten Antriebsaggregates wird immer eine hohe Stabilität der Regelung erreicht und ein Schwingen des Ausgangssignals des Leerlaufreglers sicher unterbunden.

Vorteilhafterweise umfasst die Regelung des Leerlaufes mehrere Verstärkungsfaktoren, wobei ein Verstärkungsfaktor kontinuierlich an die Leistung des ersten der beiden Antriebsaggregate angepasst wird. Diese Anpassung gewährleistet immer einen optimalen Kompromiss zwischen Regeldynamik und Stabilität des Ausgangssignals des Leerlaufreglers.

In einer Ausgestaltung werden alle Verstärkungsfaktoren gleichzeitig kontinuierlich an die Leistung des ersten der beiden Antriebsaggregate angepasst. Dies ist durch eine einfache Transformation des Ausgangssignals des Leerlaufreglers möglich, da in das Ausgangssignal alle Verstärkungsfaktoren der Regelung eingehen. Aufwendige Berechnungen zur Beeinflussung nur eines einzelnen Verstärkungsfaktors können entfallen.

Erfindungsgemäß umfasst die Regelung des Leerlaufes ein proportional wirkendes Übertragungsglied, ein integral wirkendes Übertragungsglied und ein differential wirkendes Übertragungsglied, wobei für jedes Übertragungsglied ein eigenständiger Verstärkungsfaktor vorhanden ist. Durch diese unterschiedlichen Übertragungsglieder lassen sich eine Vielfalt von regeltechnischen Zuständen einstellen.

Vorteilhafterweise wird zur Regelung des Leerlaufes der Verstärkungsfaktor mit einem Leerlaufregelfaktor beaufschlagt. Der Leerlaufregelfaktor bildet die Dynamikeinbussen bei einem Leistungsabfall des ersten der beiden Antriebsaggregate ab. Mit Hilfe des Leerlaufregelfaktors wird die Regeldynamik nur soweit zurück genommen, wie es der Leistungsabfall des ersten der beiden Antriebsaggregate erfordert. Die Regelfaktoren für die unterschiedlichen Zustände des zweiten Antriebsaggregates bleiben davon unberührt.

In einer Ausgestaltung wird der Leerlaufregelfaktor umso kleiner, je geringer die Leistung des ersten der beiden Antriebsaggregate ist. Korrekt wird der Leerlaufregelfaktor durch eine Messung des Übertragungsverhaltens der Regelstrecke bestimmt, wobei die Regelstrecke beide Antriebsaggregate umfasst. In dem Maße, wie sich das Übertragungsverhalten der Regelstrecke verschlechtert, wird der Faktor verringert.

Eine besonders einfache Einstellung des Leerlaufregelverhaltens wird dadurch erreicht, dass der Verstärkungsfaktor zur Regelung des Leerlaufes mit dem Leerlaufregelfaktor für das erste Antriebsaggregat multipliziert wird. Durch eine solche Multiplikation ist eine weiche, da stufenlose Anpassung der Leerlaufreglerverstärkungsfaktoren an die aktuelle Leistung des ersten der beiden Antriebsaggregate möglich, wobei jeder Betriebszustand des ersten der beiden Antriebsaggregate bei der Leerlaufregelung berücksichtigt wird.

In einer Weiterbildung sinkt der Leerlaufregelfaktor linear mit der Leistung des ersten der beiden Antriebsaggregate. Dabei wird ein erster Wert des Leerlaufregelfaktors der vollen Leistung des ersten Antriebsaggregates zugeordnet, während ein zweiter Wert des Leerlaufregelfaktors die ausbleibende Leistung des ersten Antriebsaggregates anzeigt. Zwischenwerte der Leistung des ersten der beiden Antriebsaggregate entsprechen dann Werten des Leerlaufregelfaktors, welche sich linear zwischen dem ersten und dem zweiten Wert des Leerlaufregelfaktors ergeben.

Alternativ ergibt sich der Leerlaufregelfaktor aus einer Kennlinie, welche als Eingangswert eine aktuell maximal verfügbare Leistung des ersten der beiden Antriebsaggregate umfasst. Durch eine solche Kennlinie lassen sich besonders gut nichtlineare Zusammenhänge zwischen der Leistung und dem Leerlaufregelfaktor abbilden. Dies ist insbesondere immer dann von Interesse, wenn weitere Einflussfaktoren, die die Leistung des ersten der beiden Antriebsaggregate beeinflussen, bei der Festlegung des Leerlaufregelfaktors mit berücksichtigt werden sollen.

Vorteilhafterweise sind die beiden Antriebsaggregate als Verbrennungsmotor und Elektromotor ausgebildet, wobei die Leistung des Elektromotors variiert. Da der Elektromotor eine höhere Regeldynamik, also ein schnelleres Ansprechen auf das Regelsignal aufweist, als der Verbrennungsmotor, wird bei maximaler Leistung des Elektromotors dessen Regeldynamik bei der Leerlaufregelung voll ausgenutzt. Mittels des Leerlaufregelfaktors wird die Regeldynamik des Elektromotors nur soweit zurückgenommen, wie es die sich verringernde Leistung des Elektromotors erfordert. Bei einer Verringerung der Leistung leistet der Elektromotor also immer noch einen Beitrag zur Regelung der Leerlaufdrehzahl.

In einer Weiterbildung wird als verfügbare Leistung das aktuell verfügbare Drehmoment des Elektromotors gemessen und der Leerlaufregelfaktor in Abhängigkeit des aktuell gemessenen Drehmomentes bestimmt. Durch die Messung des Drehmomentes wird die Leistung des Elektromotors kontinuierlich bestimmt, wobei jedem Messwert ein Leerlaufregelfaktor zugeordnet wird, was eine stufenlose Einstellung der Verstärkungsfaktoren und somit der Regelung erlaubt.

In einer Ausgestaltung werden als Eingangswert der Kennlinie eine Temperatur des Elektromotors und/oder ein aktuell verfügbarer Strom der den Elektromotor versorgenden Hochvoltbatterie verwendet. Damit werden Parameter, welche die Leistung des Elektromotors beeinflussen, bei der Leerlaufregelung mit berücksichtigt. Bei einer leeren Batterie oder einer Überhitzung des Elektromotors liefert dieser keine Leistung mehr und steht somit für die Leerlaufregelung nicht zur Verfügung.

Eine weitere Weiterbildung der Erfindung betrifft eine Vorrichtung zur Regelung des Leerlaufes in einem Hybridfahrzeug, bei welchem mindestens zwei Antriebsaggregate gemeinsam oder getrennt zum Antrieb des Hybridfahrzeuges beitragen und zur Regelung des Leerlaufes ein Sollwert mit einem Istwert verglichen wird, wobei in Abhängigkeit des Vergleiches durch eine Veränderung mindestens eines Verstärkungsfaktors der Regelung die Solldrehzahl eingestellt wird. Um die Regeldynamik an das tatsächliche Übertragungsverhalten des ersten der beiden Antriebsaggregate anzupassen, sind Mittel vorhanden, welche ermöglichen, dass die Regelung des Leerlaufes für die mindestens beiden Antriebsaggregate gleichzeitig erfolgt, wobei der mindestens eine Verstärkungsfaktor der Regelung kontinuierlich an die Leistung eines ersten der beiden Antriebsaggregate angepasst wird. Somit wird eine optimale und stabile Leerlaufregelung bei unterschiedlicher Leistung des ersten der beiden Antriebsaggregate ermöglicht und die Leerlaufregelung stufenlos an den jeweiligen Leistungszustand des ersten Antriebsaggregates angepasst. Es wird sichergestellt, dass die Regeldynamik des Leerlaufreglers nur soweit kontinuierlich zurück genommen wird, wie die Leistung des ersten Antriebsaggregates nachlässt. Damit ist in allen Zuständen gewährleistet, dass die mögliche Systemdynamik voll ausgeschöpft wird, aber dennoch die Stabilität der Regelung immer gewährleistet ist. Der Fahrer spürt dies in einer stabilen, schwingungsfreien Leerlaufregelung des Hybridfahrzeuges.

Vorteilhafterweise ist ein Regler, vorzugsweise ein PID-Regler, vorhanden, welcher die Regelung des Leerlaufes des ersten und des zweiten Antriebsaggregates gemeinsam ausführt. Mittels nur eines Reglers wird die Leerlaufregelung des ersten und zweiten Antriebsaggregates gleichzeitig ausgeführt. Auf einen zweiten Regler und eine notwendige Abstimmung zwischen den beiden Reglern kann verzichtet werden, wodurch eine kostengünstige Lösung erzielt wird.

In einer Ausgestaltung ist der Leerlaufregler Bestandteil einer Steuereinheit, welche eine Ausgangsleistung des ersten der beiden Antriebsaggregate misst, dessen Ausgangsleistung variiert. Somit sind alle für die beiden Antriebsaggregate notwendigen Regelungs- und Steuerungsprozesse in nur einer einzigen Steuereinheit vereinigt.

In einer Weiterbildung ist das erste Antriebsaggregat, dessen Ausgangleistung variiert, als Elektromotor ausgebildet, wobei das zweite Antriebsaggregat einen Verbrennungsmotor darstellt. Da der Elektromotor eine höhere Regeldynamik aufweist als der Verbrennungsmotor, leistet dieser in jedem Leistungszustand einen Beitrag zur Dynamik in der Leerlaufregelung.

Die Erfindung lässt zahlreiche Ausführungsformen zu. Eine davon soll anhand der in der Zeichnung dargestellten Figuren näher erläutert werden.

Es zeigt:
- Figur 1:: schematische Darstellung für ein als Parallelhybrid ausgeführtes Hybridfahrzeug
- Figur 2:: Ausführungsbeispiel für eine erfindungsgemäße Regelstrecke
- Figur 3:: schematisches Ablaufdiagramm für ein Ausführungsbeispiel des erfindungsgemäßen Verfahrens

Gleiche Merkmale sind mit gleichen Bezugszeichen gekennzeichnet.

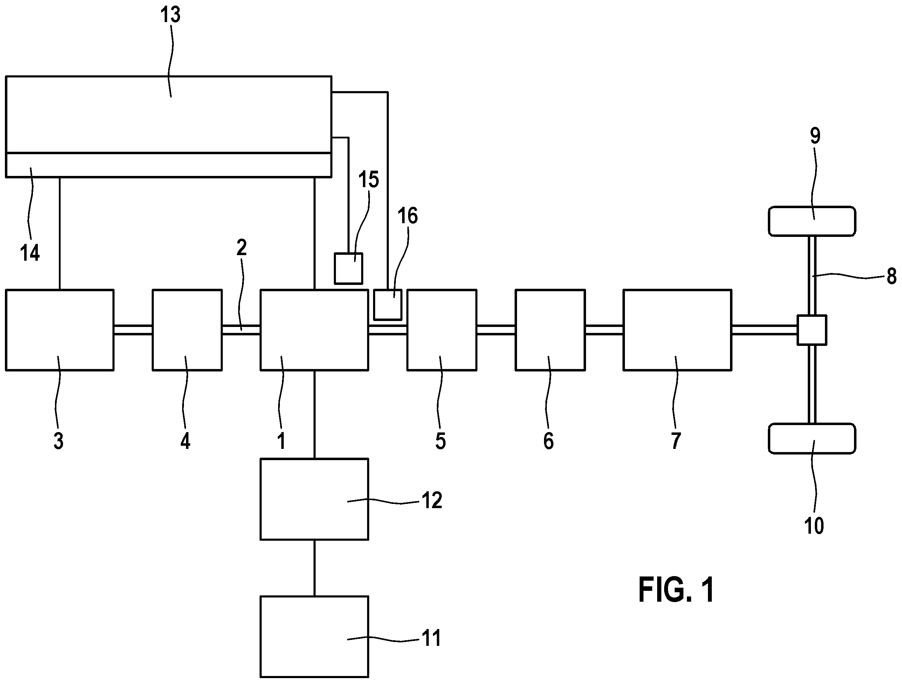

Figur 1 zeigt ein als Parallelhybrid ausgebildetes Hybridfahrzeug. In dieser Ausbildung ist ein Elektromotor 1 auf der Antriebswelle 2 eines Verbrennungsmotors 3 angeordnet. Der Verbrennungsmotor 3 ist über eine Trennkupplung 4 mit dem Elektromotor 1 verbunden. Der Elektromotor 1 führt über eine Anfahrkupplung 5 auf einen Drehmomentwandler 6, welcher mit einem Getriebe 7 verbunden ist. Das Getriebe 7 ist an eine Achse 8 geführt, an welcher die Räder 9, 10 angeordnet sind, die von dem beschriebenen Antriebsstrang angetrieben werden.

Der Elektromotor 1 wird von einer Hochvoltbatterie 11 mit Energie versorgt, welche über einen Inverter 12 mit dem Elektromotor 1 verbunden ist. Gesteuert werden der Elektromotor 1 und der Verbrennungsmotor 3 von einem Steuergerät 13. Das Steuergerät 13 umfasst einen Leerlaufregler 14, der den Leerlauf des Verbrennungsmotors 3 und des Elektromotors 1 gleichzeitig regelt.

Es gibt verschiedene Betriebsbereiche, in welchen ein Parallelhybrid betrieben werden kann. Ein erster Betriebsbereich, bei welchem die Trennkupplung 4 geöffnet ist und der Verbrennungsmotor 3 von Antriebsstrang getrennt und automatisch gestoppt ist, wird als eDrive bezeichnet, da das Hybridfahrzeug rein elektrisch durch den motorisch geschalteten Elektromotor 1 und die in der Hochvoltbatterie 11 gespeicherte Energie angetrieben wird. Besteht ein Energiebedarf, welcher von dem Elektromotor 1 allein nicht mehr aufgebracht werden kann, wird der Verbrennungsmotor 3 automatisch gestartet und an den Antriebsstrang angekuppelt, was durch Schließung der Trennkupplung 4 erfolgt. Der Verbrennungsmotor 3 trägt nun zum Antrieb des Hybridfahrzeuges bei.

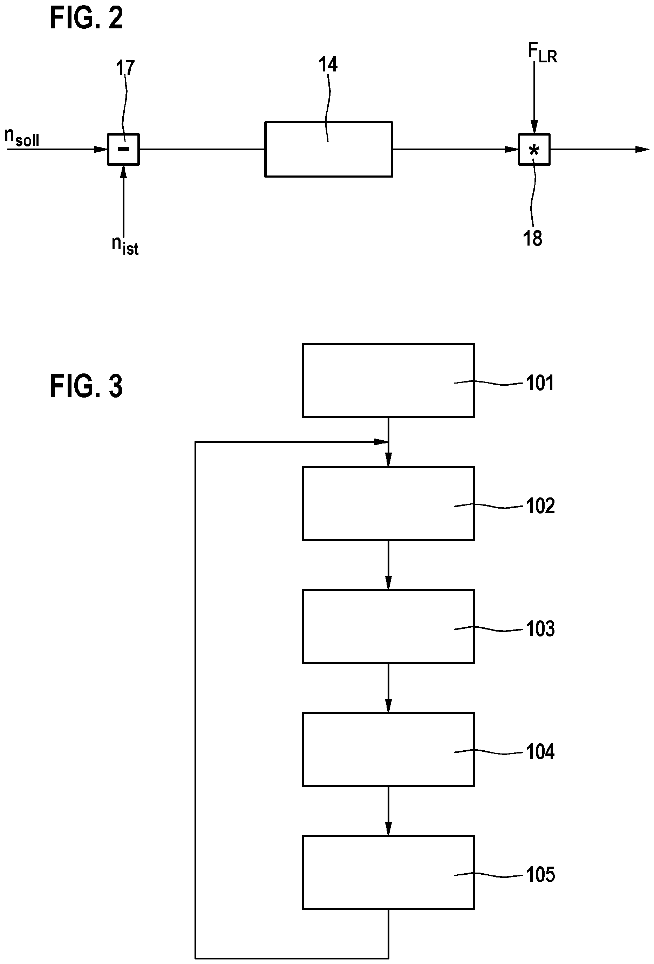

Im Leerlauf des Hybridfahrzeuges wird eine Mindestdrehzahl eingestellt. Dabei wird davon ausgegangen, dass die Trennkupplung 4 geschlossen ist und das Hybridfahrtzeug vom Elektromotor 1 und dem Verbrennungsmotor 3 gemeinsam angetrieben wird. Wie aus Figur 2 ersichtlich, wird eine Solldrehzahl nₛₒₗₗ, die bei fehlenden Fahrerwunsch zu realisieren ist und beispielsweise zwischen 800 und 900 Umdrehungen pro Minute liegt, an einen Addierer 17 geführt, an welchem ebenfalls eine Istdrehzahl n_{Ist} mit dem entgegen gesetzten Vorzeichen anliegt. Diese Istdrehzahl n_{Ist} wird mittels eines Drehzahlmessers 16 erfasst, der der Antriebswelle 2 am Ausgang des Elektromotors 1 gegenüberliegt und die erfasste Leerlaufdrehzahl an das Steuergerät 13 und den darin enthaltenen Leerlaufregler 14 meldet. Dabei wird davon ausgegangen, dass der Addierer 17 Bestandteil des Leerlaufreglers 14 ist.

Die Differenzdrehzahl, welche vom Addierer 17 an den Leerlaufregler 14 abgegeben wird, wird durch den Leerlaufregler 14 ausgewertet. Im vorliegenden Fall handelt es sich bei dem Leerlaufregler 14 um einen PID-Regler, welcher ein proportionales Übertragungsglied, ein integrales Übertragungsglied und ein differentiales Übertragungsglied aufweist. Jedes dieser Übertragungsglieder wird durch einen Verstärkungsfaktor eingestellt, die in Abhängigkeit des von dem Addierer 17 gelieferten Differenzsignals ausgewählt werden, wodurch alle drei Übertragungsglieder einen Beitrag zur Regelung leisten. Die Ausgangsgrößen des proportionalen, des integralen und des differentialen Übertragungsgliedes werden addiert und bilden ein Ausgangssignal des Reglers, welches im Multiplizierer 18 mit dem Leerlaufregelfaktor F_{LR} multipliziert wird. Der Leerlaufregelfaktor F_{LR} berücksichtigt die Leistung des Elektromotors 1, welche dieser zum Zeitpunkt der jeweiligen Regelschleife erbringt. Durch die Multiplikation des Leerlaufregelfaktors F_{LR} mit dem Ausgangssignal des Leerlaufreglers 14 wird jeder der Verstärkungsfaktoren des proportionalen, des integralen und des differentialen Verstärkungsgliedes gleichartig von dem Leerlaufregelfaktor F_{LR} beeinflusst. Das mit dem Leerlaufregelfaktor F_{LR} multiplizierte Ausgangssignal des Leerlaufreglers 14 wird dann der Regelstrecke zugeführt, welche aus dem Antriebsstrang mit dem Verbrennungsmotor 3 und dem Elektromotor 1 besteht, wobei der Elektromotor 1 und der Verbrennungsmotor 3 bei der Erzeugung der gewünschten Leerlaufdrehzahl der aktuellen Leerlaufdrehzahl entgegenwirken, um die Differenz zwischen Sollwert n_{Soll} und Istwert n_{Ist} gegen Null zu führen.

Mit Hilfe von Figur 3 wird eine mögliche Ausführungsform des erfindungsgemäßen Verfahrens erläutert. Zuerst wird im Block 101 ein Leerlaufregelfaktor F_{LR} einmalig bestimmt. Dies erfolgt in einer Applikationsphase, in welcher das Übertragungsverhalten der Regelstrecke, welche aus dem 100 % seiner Leistung abgebenden Elektromotor 1 und dem Verbrennungsmotor 3 besteht, bestimmt wird. Anhand von aufgeschalteten Störungen, wie z.B. dem Einschalten der mechanischen Klimaanlage, einem bergauf fahren oder dem Betätigen der Bremse, wird die Verstärkung der Leerlaufregelung so angepasst, dass das Ausgangsignal des Leerlaufreglers nicht schwingt. Dadurch werden die Verstärkungsfaktoren des proportionalen, des integralen und des differentialen Verstärkungsgliedes festgelegt. In dem Maße, in welchem sich das Übertragungsverhalten der Regelstrecke aufgrund eines Leistungsabfalls des Elektromotors 1 verschlechtert, verändert sich das Übertragungsverhalten der Regelstrecke. Um diesen Leistungsabfall des Elektromotors 1 zu berücksichtigen, wird ein linearer Zusammenhang zwischen dem Drehmoment des Elektromotors 1, welches die Leistung des Elektromotors 1 repräsentiert und dem Leerlaufregelfaktor F_{LR} festgelegt. Arbeitet der Elektromotor 1 mit voller Leistung, das heißt, dass das Drehmoment des Elektromotors 1 voll zur Verfügung steht, beträgt der Leerlaufregelfaktor F_{LR} gleich 1. Steht das Drehmoment des Elektromotors 1 nur eingeschränkt zur Verfügung, beträgt der Leerlaufregelfaktor 0,7, während der Leerlaufregelfaktor 0,5 beträgt, wenn das Drehmoment des Elektromotors 1 vollständig ausgefallen ist. Zwischenwerte ergeben sich dann aus dem beschriebenen linearen Kennlinienverlauf.

Nach der Festlegung des Leerlaufregelfaktors F_{LR} wird im Block 102 mittels eines Drehmomentenmessers 15, welcher am Elektromotor 1 angeordnet ist, das Drehmoment des Elektromotors 1 kontinuierlich gemessen und dem Steuergerät 13 zugeführt. Das Steuergerät 13 wertet im Block 103 das gemessene Drehmoment aus und bestimmt anhand der im Block 101 gewonnenen Kennlinie den Leerlaufregelfaktor F_{LR}, welcher dann im Block 104 mit dem Ausgangssignal des PID-Reglers 14 multipliziert wird. Das multiplizierte Ausgangssignal wird im Block 105 an die Regelstrecke ausgegeben. Somit wird die Regelung an das aktuelle Übertragungsverhalten der Regelstrecke angepasst Damit wird erreicht, dass der gesamte Regelkreis immer ein Optimum aus Dynamik und Stabilität erreicht. Der Regelvorgang beginnt dann erneut im Block 102.

Es ist aber auch vorstellbar, dass statt der in Block 101 bestimmten linearen Kennlinie ein mehrdimensionales Kennfeld bei der Bestimmung des Leerlaufregelfaktors F_{LR} berücksichtigt wird. Dazu benötigt das Steuergerät 13, insbesondere der Leerlaufregler 14 noch weitere Eingangssignale, welche einen Leistungsabfall des Elektromotors 1 kennzeichnen. Als Eingangsgrößen können dabei die Temperatur des Elektromotors 1 bzw. der verfügbare Batteriestrom der den Elektromotor 1 speisenden Hochvoltbatterie 11 dienen. Je geringer der Strom ist, welchen die Hochvoltbatterie bereitstellt, desto geringer wird das Drehmoment des Elektromotors 1. Andererseits verringert sich das Drehmoment des Elektromotors 1, wenn die Temperatur des Elektromotors 1 steigt. Somit stellen diese beiden Eingangsgrößen schon einen frühzeitigen Indikator für eine nachlassende Leistungsbereitschaft des Elektromotors 1 dar, die bei der Leerlaufregelung berücksichtigt werden.

## Patentansprüche

1. Verfahren zur Regelung des Leerlaufes in einem Hybridfahrzeug, bei welchem mindestens zwei Antriebsaggregate (1, 3) gemeinsam oder getrennt zum Antrieb des Hybridfahrzeuges beitragen und zur Regelung des Leerlaufes ein Sollwert (n_{Soll}) mit einem Istwert (n_{Ist}) verglichen wird, wobei die Regelung des Leerlaufes ein proportional wirkendes Übertragungsglied, ein integral wirkendes Übertragungsglied und ein differential wirkendes Übertragungsglied umfasst, wobei für jedes Übertragungsglied ein eigenständiger Verstärkungsfaktor vorhanden ist, wobei in Abhängigkeit des Vergleiches durch Veränderung mindestens eines der Verstärkungsfaktoren der Regelung die Solldrehzahl (n_{Soll}) eingestellt wird, und wobei die Regelung des Leerlaufes durch die mindestens beiden Antriebsaggregate (1,3) gleichzeitig erfolgt, wobei der mindestens eine Verstärkungsfaktor kontinuierlich an die Leistung eines ersten der beiden Antriebsaggregate (1) angepasst wird.

2. Verfahren nach Anspruch 1 **dadurch gekennzeichnet, dass** die Regelung des Leerlaufes mehrere Verstärkungsfaktoren umfasst, wobei ein Verstärkungsfaktor kontinuierlich an die Leistung des ersten der beiden Antriebsaggregate (1) angepasst wird.

3. Verfahren nach Anspruch 1 **dadurch gekennzeichnet, dass** alle Verstärkungsfaktoren gleichzeitig kontinuierlich an die Leistung des ersten der beiden Antriebsaggregate (1) angepasst werden.

4. Verfahren nach Anspruch 1, 2 oder 3 **dadurch gekennzeichnet, dass** zur Regelung des Leerlaufes der Verstärkungsfaktor mit einem Leerlaufregelfaktor (F_{LR}) beaufschlagt wird.

5. Verfahren nach Anspruch 4 **dadurch gekennzeichnet, dass** der Leerlaufregelfaktor (F_{LR}) umso kleiner wird, je geringer die Leistung des ersten der beiden Antriebsaggregate (1) ist.

6. Verfahren nach Anspruch 4 oder 5 **dadurch gekennzeichnet, dass** der Verstärkungsfaktor zur Regelung des Leerlaufes mit dem Leerlaufregelfaktor (F_{LR}) multipliziert wird.

7. Verfahren nach mindestens einem der vorhergehenden Ansprüche 4 bis 6 **dadurch gekennzeichnet, dass** der Leerlaufregelfaktor (F_{LR}) linear mit der Leistung des ersten der beiden Antriebsaggregate (1) sinkt.

8. Verfahren nach mindestens einem der vorhergehenden Ansprüche 4 bis 6 **dadurch gekennzeichnet, dass** der Leerlaufregelfaktor (F_{LR}) sich aus einer Kennlinie ergibt, welche als Eingangswert eine aktuell maximal verfügbare Leistung des ersten der beiden Antriebsaggregate (1) umfasst.

9. Verfahren nach mindestens einem der vorhergehenden Ansprüche **dadurch gekennzeichnet, dass** die beiden Antriebsaggregate als Verbrennungsmotor (3) und Elektromotor (1) ausgebildet sind, wobei die Leistung des Elektromotors (1) variiert.

10. Verfahren nach Anspruch 8 und 9 **dadurch gekennzeichnet, dass** als verfügbare Leistung das aktuelle verfügbare Drehmoment des Elektromotors gemessen wird und der Leerlaufregelfaktor in Abhängigkeit des aktuell gemessenen Drehmomentes bestimmt wird.

11. Verfahren nach Anspruch 8 und 10 **dadurch gekennzeichnet, dass** als Eingangswert der Kennlinie eine Temperatur des Elektromotors (1) und/oder ein aktuell verfügbarer Strom der den Elektromotor (1) versorgenden Hochvoltbatterie (11) verwendet wird.

12. Vorrichtung zur Regelung des Leerlaufes in einem Hybridfahrzeug, bei welchem mindestens zwei Antriebsaggregate (1,3) gemeinsam oder getrennt zum Antrieb des Hybridfahrzeuges beitragen und zur Regelung des Leerlaufes ein Sollwert (n_{Soll}) mit einem Istwert (n_{Ist}) verglichen wird, wobei die Regelung des Leerlaufes ein proportional wirkendes Übertragungsglied, ein integral wirkendes Übertragungsglied und ein differential wirkendes Übertragungsglied umfasst, wobei für jedes Übertragungsglied ein eigenständiger Verstärkungsfaktor vorhanden ist, wobei in Abhängigkeit des Vergleiches durch eine Veränderung mindestens eines Verstärkungsfaktors der Regelung der Sollwert (n_{Soll}) der Drehzahl eingestellt wird, wobei Mittel (13, 14) vorhanden sind, welche ermöglichen, dass die Regelung des Leerlaufes durch die mindestens beiden Antriebsaggregate (1,3) gleichzeitig erfolgt, wobei der mindestens eine Verstärkungsfaktor der Regelung kontinuierlich an die Leistung eines ersten der beiden Antriebsaggregate (1) angepasst wird.

13. Vorrichtung nach Anspruch 12 **dadurch gekennzeichnet, dass** ein Leerlaufregler (14), vorzugsweise ein PID-Regler, vorhanden ist, welcher die Regelung des Leerlaufes des ersten und des zweiten Antriebsaggregates (1,3) gemeinsam ausführt.

14. Vorrichtung nach Anspruch 13 **dadurch gekennzeichnet, dass** der Leerlaufregler (14) Bestandteil einer Steuereinheit (13) ist, welche eine Ausgangsleistung des ersten der beiden Antriebsaggregate (1) misst, dessen Ausgangsleistung variiert.

15. Vorrichtung nach Anspruch 14 **dadurch gekennzeichnet, dass** das erste Antriebsaggregat, dessen Ausgangleistung variiert, als Elektromotor (1) ausgebildet ist, wobei das zweite Antriebsaggregat einen Verbrennungsmotor (3) darstellt.

## Claims

1. Method for controlling the idle speed in a hybrid vehicle, in which at least two drive assemblies (1, 3) contribute jointly or separately to the driver of the hybrid vehicle, and in order to control the idle speed, a setpoint value (n_{Soll}) is compared with an actual value (n_{Ist}), wherein the control of the idle speed comprises a proportionally acting transmission element, an integrally acting transmission element and a differentially acting transmission element, wherein an independent amplification factor is present for each transmission element, wherein the setpoint rotational speed (n_{Soll}) is set as a function of the comparison by changing at least one of the amplification factors of the control, and wherein the control of the idle speed takes place simultaneously by the at least two drive assemblies (1, 3), wherein the at least one amplification factor is adapted continuously to the power of a first of the two drive assemblies (1).

2. Method according to Claim 1, **characterized in that** the control of the idle speed comprises a plurality of amplification factors, wherein one amplification factor is continuously adapted to the power of the first of the two drive assemblies (1).

3. Method according to Claim 1, **characterized in that** all the amplification factors are simultaneously adapted continuously to the power of the first of the two drive assemblies (1).

4. Method according to Claim 1, 2 or 3, **characterized in that** in order to control the idle speed an idle control factor (F_{LR}) is applied to the amplification factor.

5. Method according to Claim 4, **characterized in that** the idle control factor (F_{LR}) is smaller the lower the power of the first of the two drive assemblies (1).

6. Method according to Claim 4 or 5, **characterized in that** the amplification factor for controlling the idle speed is multiplied by the idle control factor (F_{LR}).

7. Method according to at least one of the preceding Claims 4 to 6, **characterized in that** the idle control factor (F_{LR}) drops linearly with the power of the first of the two drive assemblies (1).

8. Method according to at least one of the preceding Claims 4 to 6, **characterized in that** the idle control factor (F_{LR}) is obtained from a characteristic curve which comprises, as an input value, a current maximum available power of the first of the two drive assemblies (1).

9. Method according to at least one of the preceding claims, **characterized in that** the two drive assemblies are embodied as an internal combustion engine (3) and an electric motor (1), wherein the power of the electric motor (1) varies.

10. Method according to Claims 8 and 9, **characterized in that** the current available torque of the electric motor is measured as the available power, and the idle control factor is determined as a function of the currently measured torque.

11. Method according to Claims 8 and 10, **characterized in that** a temperature of the electric motor (1) and/or a currently available current of the high-voltage battery (11) which supplies the electric motor (1) are/is used as an input value of the characteristic curve.

12. Device for controlling the idle speed in a hybrid vehicle, in which at least two drive assemblies (1, 3) contribute jointly or separately to the driver of the hybrid vehicle, and in order to control the idle speed a setpoint value (n_{Soll}) is compared with an actual value (n_{Ist}), wherein the control of the idle speed comprises a proportionally acting transmission element, an integrally acting transmission element and a differentially acting transmission element, wherein an independent amplification factor is present for each transmission element, wherein the setpoint rotational speed (n_{Soll}) is set as a function of the comparison by changing at least one of the amplification factors of the control, wherein means (13, 14) are present which permit the control of the idle speed to take place simultaneously by means of the at least two drive assemblies (1, 3), wherein the at least one amplification factor of the control is adapted continuously to the power of the first of the two drive assemblies (1).

13. Device according to Claim 12, **characterized in that** an idle speed controller (14), preferably a PID controller, is present which carries out the control of the idle speed of the first and second drive assemblies (1, 3) jointly.

14. Device according to Claim 13, **characterized in that** the idle speed controller (14) is a component of a control unit (13) which measures an output power of the first of the two drive assemblies (1) whose output power varies.

15. Device according to Claim 14, **characterized in that** the first drive assembly whose output power varies is embodied as an electric motor (1), wherein the second drive assembly constitutes an internal combustion engine (3).

## Revendications

1. Procédé pour réguler le ralenti dans un véhicule hybride, dans lequel au moins deux unités d'entraînement (1, 3) contribuent ensemble ou séparément à l'entraînement du véhicule hybride et une valeur de consigne (nₛₒₗₗ) est comparée à une valeur réelle (nᵢₛₜ) pour la régulation du ralenti, dans lequel le dispositif de régulation du ralenti comprend un organe de transmission à effet proportionnel, un organe de transmission à effet intégral et un organe de transmission à effet différentiel, dans lequel il est prévu un facteur d'amplification indépendant pour chaque organe de transmission, dans lequel la vitesse de rotation (nₛₒₗₗ) est réglée en fonction de la comparaison par modification d'au moins l'un des facteurs d'amplification de la régulation, et dans lequel la régulation du ralenti est effectuée simultanément par au moins deux ensembles d'entraînement (1, 3), dans lequel ledit au moins un facteur d'amplification est adapté en continu à la puissance d'un premier desdits deux ensembles d'entraînement (1).

2. Procédé selon la revendication 1, **caractérisé en ce que** la régulation du ralenti comprend plusieurs facteurs d'amplification, dans lequel un facteur d'amplification est adapté en continu à la puissance du premier des deux ensembles d'entraînement (1).

3. Procédé selon la revendication 1, **caractérisé en ce que** tous les facteurs d'amplification sont adaptés en continu et en même temps à la puissance du premier des deux ensembles d'entraînement (1).

4. Procédé selon la revendication 1, 2 ou 3, **caractérisé en ce qu'**un facteur de régulation du ralenti (F_{LR}) est appliqué au facteur d'amplification pour réguler le ralenti.

5. Procédé selon la revendication 4, **caractérisé en ce que** le facteur de régulation du ralenti (F_{LR}) diminue d'autant plus que la puissance du premier des deux ensembles d'entraînement (1) est faible.

6. Procédé selon la revendication 4 ou 5, **caractérisé en ce que** le facteur d'amplification est multiplié par le facteur de régulation du ralenti (F_{LR}) pour réguler le ralenti.

7. Procédé selon au moins l'une des revendications précédentes 4 à 6, **caractérisé en ce que** le facteur de régulation du ralenti (F_{LR}) diminue linéairement avec la puissance du premier des deux ensembles d'entraînement (1).

8. Procédé selon au moins l'une des revendications 4 à 6 précédentes, **caractérisé en ce que** le facteur de régulation du ralenti (F_{LR}) résulte d'une courbe caractéristique qui comprend en tant que valeur d'entrée une puissance maximale actuelle disponible du premier des deux ensembles d'entraînement (1).

9. Procédé selon au moins l'une des revendications précédentes, **caractérisé en ce que** les deux ensembles d'entraînement sont réalisés sous la forme d'un moteur à combustion (3) et d'un moteur électrique (1), dans lequel la puissance du moteur électrique (1) est variable.

10. Procédé selon les revendications 8 et 9, **caractérisé en ce que** la puissance disponible est mesurée sous la forme du couple actuel disponible du moteur électrique et **en ce que** le facteur de régulation du ralenti est déterminé en fonction du couple actuel mesuré.

11. Procédé selon les revendications 8 et 10, **caractérisé en ce que** la valeur d'entrée de la courbe caractéristique est une température du moteur électrique (1) et/ou un courant actuellement disponible de la batterie haute tension (11) alimentant le moteur électrique (1).

12. Dispositif pour la régulation du ralenti dans un véhicule hybride, dans lequel au moins deux ensembles d'entraînement (1, 3) contribuent ensemble ou séparément à l'entraînement du véhicule hybride et une valeur de consigne (nₛₒₗₗ) est comparée à une valeur réelle (nᵢₛₜ) pour la régulation du ralenti, dans lequel la régulation du ralenti comprend un organe de transmission à effet proportionnel, un organe de transmission à effet intégral et un organe de transmission à effet différentiel, dans lequel il est prévu un facteur d'amplification indépendant pour chaque organe de transmission, dans lequel la valeur de consigne (nₛₒₗₗ) de la vitesse de rotation est réglée en fonction de la comparaison par modification d'au moins un facteur d'amplification de la régulation, dans lequel il est prévu des moyens qui permettent la régulation du ralenti par au moins les deux ensembles d'entraînement (1, 3) simultanément, dans lequel ledit au moins un facteur d'amplification de la régulation est adapté en continu à la puissance d'un premier des deux ensembles d'entraînement (1).

13. Dispositif selon la revendication 12, **caractérisé en ce qu'**il est prévu un régulateur de ralenti (14), de préférence un régulateur PID, qui assure conjointement la régulation du ralenti des premier et deuxième ensembles d'entraînement (1, 3).

14. Dispositif selon la revendication 13, **caractérisé en ce que** le régulateur de ralenti (14) fait partie d'une unité de commande (13) qui mesure une puissance de sortie du premier des deux ensembles d'entraînement (1) dont la puissance de sortie varie.

15. Dispositif selon la revendication 14, **caractérisé en ce que** le premier ensemble d'entraînement, dont la puissance de sortie varie, est réalisé sous la forme d'un moteur électrique (1), dans lequel le second ensemble d'entraînement représente un moteur à combustion (3).
